# EUROPEAN PATENT SPECIFICATION

(11) **EP 1 156 251 B1**
(45) Date of publication and mention of the grant of the patent: **11.08.2004**
(21) Application number: 01111436.0
(22) Date of filing: 10.05.2001
(51) Int. Cl.: F16L 11/04

(54) **Fuel transporting hose**
Kraftstoffschlauch
Tuyau pour transport d'essence

(30) Priority: 11.05.2000 JP 2000138551
(43) Date of publication of application: 21.11.2001
(73) Proprietor: Tokai Rubber Industries, Ltd., Komaki-shi, Aichi-ken, 485-8550 (JP)
(72) Inventor: Kanbe, Shinobu, Aichi-ken, 485-0029 (JP); Nishiyama, Takahiro, Kasugai-shi, Aichi-ken, 486-0903 (JP)
(74) Representative: Frankland, Nigel Howard

(56) References cited:
- US-A- 4 435 532
- US-A- 5 356 681
- US-A- 6 043 318
- DATABASE WPI Week 199040 Derwent Publications Ltd., London, GB; AN 1990-302924 XP002230188 & JP 02 215851 A (MITSUBISHI KASEI VINYL KK), 28 August 1990 (1990-08-28)

## Description

### BACKGROUND OF THE INVENTION

### Field of the Invention

The present invention relates to a fuel transporting hose and, more particularly, to an automobile fuel transporting hose for use as a bleeder hose, an evaporator hose or a filler hose which is in contact with gasoline and vapor of the gasoline.

### Description of the Art

Automobile fuel transporting hoses such as a bleeder hose, an evaporator hose and a filler hose are generally composed of a rubber composition consisting essentially of a polymer blend of acrylonitrile-butadiene copolymer rubber (NBR) and polyvinyl chloride (PVC). Such an automobile fuel transporting hose is produced in the following manner, for example, through a hose bending process and/or a hose end enlarging process. The rubber composition consisting essentially of the NBR-PVC polymer blend is extruded for formation of an unvulcanized hose, which is in turn fitted around a mandrel of a predetermined shape (having a bent portion or an enlarged end portion). After the hose is directly steam-vulcanized in this state, the resulting hose is removed from the mandrel. Thus, the fuel transporting hose is produced as having a bent portion or an enlarged end portion. A releasing agent is applied onto an outer peripheral surface of the mandrel or an inner peripheral surface of the un-vulcanised hose to ensure that the hose can easily be fitted around the mandrel and removed from the mandrel.

Where the curvature radius R of the bent portion of the hose is too large or the enlargement rate of the enlarged end portion of the hose is too great, however, the hose is liable to have cracks in an inner peripheral surface or an end portion thereof. The cracking is noticeable particularly where the automobile fuel transporting hose is mainly composed of the NBR-PVC polymer blend. This poses limitation to the design of the hose.

EP-A-1,152,029 A1 discloses a polyblend composition for use in making a hose for fuel. The polyblend composition comprises a nitrile rubber having a bound unsaturated nitrile content of at least 44% by weight, a vinyl chloride resin and alkanedicarboxylic acid ether ester plasticiser having an alkane structure with 3 to 8 carbon atoms.

In view of the foregoing, it is an object of the present invention to provide a fuel transporting hose which is substantially free from cracking in an inner peripheral surface or an end portion thereof.

According to one aspect of this invention there is provided a fuel transporting hose comprising a layer of a rubber composition mainly comprised of a polymer blend which consists of:
(A) an acrylonitrile-butadiene rubber containing bound acrylonitrile in a proportion of 42 wt% to 52 wt%; and
(B) a polyvinyl chloride having an average polymerisation degree of 700 to 1400,
wherein the component (A) and the component (B) are present in a weight ratio of (A)/(B)=90/10 to 65/35 in the polymer blend,
wherein the polymer blend prior to vulcanisation has a Mooney viscosity of 20 to 45 at a vulcanisation temperature, and
wherein the hose has a portion extended at an extension rate of 10% to 100% with respect to a corresponding portion thereof before vulcanisation.

According to another aspect of this invention there is provided a method of making a fuel transporting hose comprising a layer of a rubber composition mainly comprised of a polymer blend which consists of:
(A) an acrylonitrile-butadiene rubber containing bound acrylonitrile in a proportion of 42 wt% to 52 wt%; and
(B) a polyvinyl chloride having an average polymerisation degree of 700 to 1400,
wherein the component (A) and the component (B) are present in a weight ratio of (A)/(B)=90/10 to 65/35 in the polymer blend,
wherein the polymer blend prior to vulcanisation has a Mooney viscosity of 20 to 45 at a vulcanisation temperature, comprising the step of extending a portion of the hose at an extension rate of 10% to 100% with respect to a corresponding portion thereof before vulcanisation.

The inventors of the present invention have conducted studies on the cause of the cracking in the inner peripheral surface or the end portion of the hose. The studies have revealed that the releasing agent applied on the outer peripheral surface of the mandrel or the inner peripheral surface of the un-vulcanised hose gradually penetrates into the NBR-PVC polymer blend in the hose so that NBR-PVC phase separation is caused by the heat applied for the vulcanisation of the hose, resulting in cracking the hose. As a result of intensive studies for suppression of the penetration of the releasing agent into the polymer blend, the inventors have found that the affinity of the polymer blend for the releasing agent is reduced by increasing the amount of the bound acrylonitrile (hereinafter referred to as "ACN amount") in the NBR as compared with a conventional ACN amount (typically about 30 wt% to about 40 wt%), whereby the penetration of the releasing agent into the polymer blend can be suppressed. As a result of further studies, the inventors have found that the NBR-PVC phase separation due to the increase in the ACN amount can be suppressed by setting the average PVC polymerization degree, the NBR-to-PVC blend ratio and the Mooney viscosity of the polymer blend and the extension rate of the hose within the aforesaid ranges , whereby the cracking can be suppressed. Thus, the present invention has been attained.

The extension rate of the hose herein means the rate of extension of the hose occurring when the hose is bent as having a curvature radius R or an end portion of the hose is enlarged as having a greater diameter in a vulcanization process.

### BRIEF DESCRIPTION OF THE DRAWINGS

Fig. 1 is a sectional view of an unvulcanized hose;
Fig. 2 is a schematic diagram illustrating a metal mandrel having an enlarged end portion; and
Fig. 3 is a sectional view illustrating a fuel transporting hose having an enlarged end portion.

### DETAILED DESCRIPTION OF THE INVENTION

The present invention will hereinafter be described in detail by way of embodiments thereof.

A fuel transporting hose according to the present invention may be either of a single layer structure or of a multi-layer structure having two or more layers, as long as at least one layer of the hose is composed of a specific rubber composition.

The specific rubber composition is mainly comprised of a polymer blend which comprises: (A) a specific NBR; and (B) a specific PVC.

The rubber composition may contain the polymer blend alone.

The NBR (component A) needs to contain bound acrylonitrile (ACN) in an amount of 42 wt% to 52 wt%, preferably 44 wt% to 50 wt%. If the ACN amount in the NBR is smaller than 42 wt%, the resulting polymer blend tends to have an excessively high affinity for the releasing agent, so that the releasing agent is more liable to penetrate into the polymer blend to cause cracks in the inner peripheral surface and end portion of the hose. On the other hand, if the ACN amount in the NBR is greater than 52 wt%, the compatibility between the NBR and the PVC tends to be reduced to cause the NBR-PVC phase separation, whereby the cracking is more liable to occur in the hose.

The PVC (component B) blended with the NBR (component A) needs to have an average polymerization degree of 700 to 1400, preferably about 800. If the average PVC polymerization degree is lower than 700, the resulting polymer blend tends to have an excessively low viscosity to cause the NBR-PVC phase separation when heated and extended, whereby the cracking is more liable to occur in the hose. On the other hand, if the average PVC polymerization degree is greater than 1400, the PVC is more liable to be oriented when the resulting rubber composition is extruded. This may cause the NBR-PVC phase separation, resulting in the cracking in the hose.

The blend ratio (weight ratio) between the NBR (component A) and the PVC (component B) needs to be set within the range of (A)/(B)=90/10 to 65/35, preferably (A)/(B)=75/25 to 68/32. If the blend ratio of the component B is lower than 10, the resulting polymer blend tends to be inferior in properties such as ozone resistance. On the other hand, if the blend ratio of the component B is greater than 35, the PVC is more liable to be oriented when the resulting rubber composition is extruded. This may cause the NBR-PVC phase separation, resulting in the cracking in the hose.

The polymer blend containing the NBR (component A) and the PVC (component B) in the predetermined blend ratio needs to have a Mooney viscosity of 20 to 45, preferably 28 to 43, at a vulcanization temperature (about 150° C) . If the Mooney viscosity of the polymer blend is lower than 20, the NBR-PVC phase separation tends to occur when the resulting rubber composition is heated and extended, whereby the cracking is more liable to occur in the hose. On the other hand, if the Mooney viscosity of the polymer blend is greater than 45, the resulting rubber composition tends to have an inferior workability.

The rubber composition may contain a processing agent, an anti-aging agent, a reinforcing agent, a plasticizer, a vulcanizer, a vulcanization accelerator, a vulcanization acceleration assisting agent, a vulcanization retarder, a filler and the like, as required, in addition to the polymer blend.

Examples of the processing agent include stearic acid, fatty esters, fatty amides and hydrocarbon resins . The processing agent is typically blended in a proportion of 0.1 to 10 parts by weight (hereinafter expressed simply as "parts") based on 100 parts of the polymer blend.

Examples of the anti-aging agent include phenylenediamine-based anti-aging agents, phenol-based anti-aging agents, diphenylamine-based anti-aging agents, quinoline-based anti-aging agents and waxes. The anti-aging agent is typically blended in a proportion of 0.2 to 5 parts based on 100 parts of the polymer blend.

Examples of the reinforcing agent include carbon black and white carbon. The reinforcing agent is typically blended in a proportion of 10 to 120 parts based on 100 parts of the polymer blend.

Examples of the plasticizer include phthalic acid-based plasticizers such as DOP (dioctyl phthalate or di-(2-ethylhexyl) phthalate) and DBP (dibutyl phthalate), adipic acid-based plasticizers such as dibutylcarbitol adipate and DOA (dioctyl adipate or di-(2-ethylhexyl) adipate), sebacic acid-based plasticizers such as DOS (dioctyl sebacate or di-(2-etylhexyl) sebacate) and DBS (dibutyl sebacate). The plasticizer is typically blended in a proportion of 5 to 40 parts based on 100 parts of the polymer blend.

Examples of the vulcanizer include sulfur, morpholine, sulfur compounds such as disulfides, and organic peroxides. The vulcanizer is typically blended in a proportion of 0.2 to 5 parts based on 100 parts of the polymer blend.

Examples of the vulcanization accelerator include thiazole-based vulcanization accelerators, thiuram-based vulcanization accelerators and sulfenamide-based vulcanization accelerators. The vulcanizer accelerator is typically blended in a proportion of 0.2 to 5 parts based on 100 parts of the polymer blend.

Examples of the vulcanization acceleration assisting agent include zinc oxide, activated zinc white and magnesium oxide. The vulcanization acceleration assisting agent is typically blended in a proportion of 0.5 to 10 parts based on 100 parts of the polymer blend.

An example of the vulcanization retarder is N-(cyclohexylthio)phthalimide. The vulcanization retarder is typically blended in a proportion of 0.1 to 3 parts based on 100 parts of the polymer blend.

Examples of the filler include calcium carbonate, magnesium carbonate, clay and talc. The filler is typically blended in a proportion of 10 to 100 parts based on 100 parts of the polymer blend.

The inventive fuel transporting hose is produced in the following manner. The NBR (component A) and the PVC (component B) are blended in a predetermined ratio for preparation of the polymer blend. In turn, the processing agent, the anti-aging agent, the reinforcing agent, the vulcanizer, the vulcanization accelerator and the like are blended with the polymer blend, and the resulting mixture is kneaded by means of a kneader, a Banbury mixer, a roll or the like for preparation of the rubber composition. Then, the rubber composition is extruded with the use of an extruder for production of an unvulcanized hose of a single layer structure, and a releasing agent is applied on an inner peripheral surface of the unvulcanized hose. A metal mandrel of a predetermined shape (having a bent portion and/or an enlarged end portion) is prepared. After the releasing agent is applied on an outer peripheral surface of the mandrel, the mandrel is preheated up to a predetermined temperature (about 150 °C). Then, the unvulcanized hose is fitted around the metal mandrel, and steam-vulcanized, for example, at 150°C for 30 minutes for curing the rubber composition. Thereafter, the hose is removed from the metal mandrel. Thus, the intended fuel transporting hose of the single layer structure is obtained.

Preferred examples of the releasing agent include glycol-based releasing agents such as polyethylene glycol (PEG), polypropylene glycol (PPG) and a mixture thereof, and silicone oil releasing agents.

The releasing agent is preferably applied on both the outer peripheral surface of the mandrel and the inner peripheral surface of the unvulcanized hose, but may be applied on either of them.

As described above, the fuel transporting hose according to the present invention is not necessarily required to be of the single layer structure, but may be of the multi-layer structure having the layer of the rubber composition mainly comprised of the polymer blend, and a reinforcement layer and/or a surface layer provided on the outer periphery of the rubber layer.

The inventive fuel transporting hose thus obtained is advantageously used as an automobile fuel transporting hose such as a bleeder hose, an evaporator hose or a filler hose which is in contact with gasoline or vapor of the gasoline.

Next, an explanation will be given to Examples and Comparative Examples.

Prior to the explanation of Examples and Comparative Examples, ingredients employed in these examples will be explained.

### [Polymer blends]

Polymer blends were each prepared by blending an NBR having an ACN amount as shown in Table 1 and a PVC having an average polymerization degree as shown in Table 1 in a predetermined weight ratio. The Mooney viscosity of each of the polymer blends was measured in conformity with JIS K6300 (Mooney viscosity test) with the use of an L-type rotor after a lapse of four minutes following one-minute heating at 150°C.

**Table 1**

| Polymer blend | ACN amount (wt%) | Average Polymerization degree | NBR/PVC (weight ratio) | Mooney viscosity |
|---|---|---|---|---|
| A | 42 | 800 | 70/30 | 28 |
| B | 46 | 800 | 70/30 | 22 |
| C | 46 | 1400 | 70/30 | 28 |
| D | 46 | 800 | 70/30 | 43 |
| E | 50 | 800 | 70/30 | 30 |
| F | 46 | 800 | 90/10 | 45 |
| G | 46 | 800 | 65/35 | 20 |
| H | 52 | 800 | 70/30 | 25 |
| I | 46 | 700 | 70/30 | 20 |
| a | 35 | 800 | 70/30 | 36 |
| b | 55 | 800 | 70/30 | 25 |
| c | 46 | 800 | 50/50 | 25 |
| d | 46 | 500 | 70/30 | 18 |
| e | 46 | 1600 | 70/30 | 43 |

### [Anti-aging agent]

N,N'-diphenyl-p-phenylenediamine (OZONONE 3C available from Seiko Chemical Co., Ltd.)

### [Carbon black]

MAF carbon black (SEAST 11b available from Tokai Carbon Co., Ltd.)

### [Synthesized plasticizer]

Dibutylcarbitol diadipate (ADECASIZER RS-107 available from Asahi Denka Kogyo Co., Ltd.)

### [Vulcanization accelerator]

Tetraethylthiuram disulfide (NOCSELLER TET available from Ouchi Shinko Kagaku K.K.)

### Examples 1 to 9 and comparative Examples 1 to 5

Rubber compositions were each prepared by blending the aforesaid ingredients in a blend ratio as shown in Tables 2 to 4 and kneading the resulting mixture by means of a kneader. Fuel transporting hoses were produced by employing the respective rubber compositions, and then evaluated for cracking.

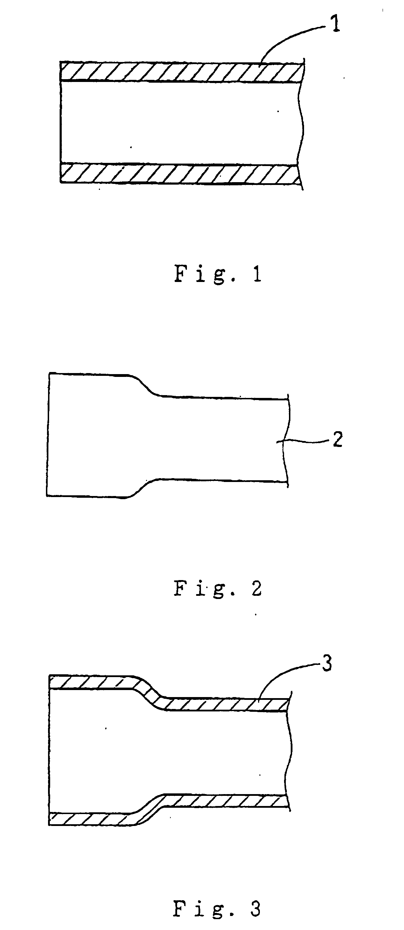

An unvulcanized hose 1 having an inner diameter of 30 mm and a wall thickness of 3 mm as shown in Fig. 1 was produced by extruding each of the rubber compositions by means of an extruder. A chromium-plated metal mandrel 2 (outer diameter: 30 mm) as shown in Fig. 2 was prepared which had an enlarged end portion having a length of 30 mm as measured from an end thereof and an outer diameter of 60 mm. Then, the mandrel 2 was preheated at 150° C. After a predetermined releasing agent (a glycol-based releasing agent or a silicone oil releasing agent) was applied on an inner peripheral surface of the unvulcanized hose 1 and an outer peripheral surface of the metal mandrel 2, the unvulcanized hose 1 was fitted around the metal mandrel 2, and directly steam-vulcanized at 150 ° C for 30 minutes. Thereafter, the resulting hose was removed from the metal mandrel 2. Thus, a fuel transporting hose 3 of a single layer structure (wall thickness: 1.6 mm) was produced which had an enlarged end portion as shown in Fig. 3. Used as the glycol-based releasing agent and the silicone oil releasing agent are PEG 300 (Daiichi Kogyo Seiyaku Co . , Ltd.) and KF96 (Shinetsu Chemical Co., Ltd.), respectively.

For evaluation of the fuel transporting hoses, the end portion and inner peripheral surface of each of the hoses were visually observed to check for cracking. The results are shown in Tables 2 to 4, in which a symbol ○ indicates that no crack was observed on either the inner peripheral surface or the end portion of the hose, a symbol Δ indicates that cracks were observed only on the inner peripheral surface of the hose, and a symbol × indicates that cracks were observed on both the inner peripheral surface and the end portion of the hose. The extension rates (enlargement rates) of the hoses with respect to the unvulcanized hoses are also shown in Tables 2 to 4.

**Table 2**

| (parts) | | | | | | |
|---|---|---|---|---|---|---|
| | Example | | | | | |
| | 1 | 2 | 3 | 4 | 5 | 6 |
| Polymer blend (A) | 100 | - | - | - | - | - |
| Polymer blend (B) | - | 100 | - | - | - | - |
| Polymer blend (C) | - | - | 100 | - | - | - |
| Polymer blend (D) | - | - | - | 100 | - | - |
| Polymer blend (E) | - | - | - | - | 100 | - |
| Polymer blend (F) | - | - | - | - | - | 100 |
| Zinc oxide | 5 | 5 | 5 | 5 | 5 | 5 |
| Stearic acid | 1 | 1 | 1 | 1 | 1 | 1 |
| Anti-aging agent | 2 | 2 | 2 | 2 | 2 | 2 |
| Carbon black | 60 | 60 | 60 | 60 | 60 | 60 |
| Synthesized plasticizer | 20 | 20 | 20 | 20 | 20 | 20 |
| Sulfur | 0.5 | 0.5 | 0.5 | 0.5 | 0.5 | 0.5 |
| Vulcanization accelerator | 3 | 3 | 3 | 3 | 3 | 3 |

| Evaluation for cracking | | | | | | |
|---|---|---|---|---|---|---|
| Glycol-based releasing agent | ○ | ○ | ○ | ○ | ○ | ○ |
| Silicone oil releasing agent | ○ | ○ | ○ | ○ | ○ | ○ |
| Extension rate (%) | 100 | 100 | 100 | 100 | 100 | 100 |

**Table 3**

| (parts) | | | |
|---|---|---|---|
| | Example | | |
| | 7 | 8 | 9 |
| Polymer blend (G) | 100 | - | - |
| Polymer blend (H) | - | 100 | - |
| Polymer blend (I) | - | - | 100 |
| Zinc oxide | 5 | 5 | 5 |
| Stearic acid | 1 | 1 | 1 |
| Anti-aging agent | 2 | 2 | 2 |
| Carbon black | 60 | 60 | 60 |
| Synthesized plasticizer | 20 | 20 | 20 |
| Sulfur | 0.5 | 0.5 | 0.5 |
| Vulcanization accelerator | 3 | 3 | 3 |

| Evaluation for cracking | | | |
|---|---|---|---|
| Glycol-based releasing agent | ○ | ○ | ○ |
| Silicone oil releasing agent | ○ | ○ | ○ |
| Extension rate (%) | 100 | 100 | 100 |

**Table 4**

| (parts) | | | | | |
|---|---|---|---|---|---|
| | Comparative Example | | | | |
| | 1 | 2 | 3 | 4 | 5 |
| Polymer blend (a) | 100 | - | - | - | - |
| Polymer blend (b) | - | 100 | - | - | - |
| Polymer blend (c) | - | - | 100 | - | - |
| Polymer blend (d) | - | - | - | 100 | - |
| Polymer blend (e) | - | - | - | - | 100 |
| Zinc oxide | 5 | 5 | 5 | 5 | 5 |
| Stearic acid | 1 | 1 | 1 | 1 | 1 |
| Anti-aging agent | 2 | 2 | 2 | 2 | 2 |
| Carbon black | 60 | 60 | 60 | 60 | 60 |
| Synthesized plasticizer | 20 | 20 | 20 | 20 | 20 |
| Sulfur | 0.5 | 0.5 | 0.5 | 0.5 | 0.5 |
| Vulcanization accelerator | 3 | 3 | 3 | 3 | 3 |

| Evaluation for cracking | | | | | |
|---|---|---|---|---|---|
| Glycol-based releasing agent | × | Δ | × | Δ | Δ |
| Silicone oil releasing agent | × | Δ | Δ | Δ | Δ |
| Extension rate (%) | 100 | 100 | 100 | 100 | 100 |

As can be understood from the results shown in Tables 2 to 4, the hoses according to Examples 1 to 9 each had lower affinities for the releasing agents, so that the penetration of the releasing agents into the polymer blend and the NBR-PVC phase separation were suppressed. As a result, cracking in the inner peripheral surface and end portion of each of the hoses was suppressed. This is because the hoses were each composed of a rubber composition which contained a polymer blend having an ACN amount in the NBR, an average PVC polymerization degree, a NBR-PVC blend ratio and a Mooney viscosity respectively set within the predetermined ranges.

On the contrary, the hose of Comparative Example 1 was composed of the rubber composition which contained the polymer blend (a) having an excessively small ACN amount in the NBR. Therefore, the releasing agents penetrated into the polymer blend to cause cracks in the inner peripheral surface and end portion of the hose. The hose of Comparative Example 2 was composed of the rubber composition which contained the polymer blend (b) having an excessively great ACN amount in the NBR. Therefore, the compatibility between the NBR and the PVC was reduced to cause phase separation, resulting in cracks in the inner peripheral surface of the hose. The hose of Comparative Example 3 was composed of the rubber composition which contained the polymer blend (c) having an excessively great PVC proportion. Therefore, the PVC was more liable to be oriented to cause the NBR-PVC phase separation when the rubber composition was extruded, resulting in cracks in the inner peripheral surface and end portion of the hose. The hose of Comparative Example 4 was composed of the rubber composition which contained the polymer blend (d) having an excessively low PVC polymerization degree. Therefore, the PVC was more liable to be oriented to cause the NBR-PVC phase separation when the rubber composition was extruded. Further, the polymer blend (d) had an excessively low viscosity and, therefore, the NBR-PVC phase separation was more liable to occur when the unvulcanized hose was heated and extended, resulting in cracks in the inner peripheral surface of the hose. The hose of Comparative Example 5 was composed of the rubber composition which contained the polymer blend (e) having an excessively great PVC polymerization degree. Therefore, the PVC was more liable to be oriented to cause the NBR-PVC phase separation when the rubber composition was extruded, resulting in cracks in the inner peripheral surface of the hose.

As described above, the fuel transporting hose according to the present invention has at least one layer composed of the specific rubber composition containing the polymer blend prepared by blending the NBR and the PVC in the predetermined blend ratio. In the present invention, the NBR has a greater ACN amount than that employed in a conventional hose of this type, so that the polymer blend has a reduced affinity for the releasing agent. Therefore, the penetration of the releasing agent into the polymer blend can be suppressed. In addition, the average PVC polymerization degree, the NBR-PVC blend ratio and the Mooney viscosity of the polymer blend and the extension rate of the hose are respectively set within the predetermined ranges, so that the NBR-PVC phase separation can be suppressed. As a result, cracking in the inner peripheral surface and end portion of the hose can be suppressed.

## Claims

1. A fuel transporting hose comprising a layer of a rubber composition mainly comprised of a polymer blend which consists of:
(A) an acrylonitrile-butadiene rubber containing bound acrylonitrile in a proportion of 42 wt% to 52 wt%; and
(B) a polyvinyl chloride having an average polymerisation degree of 700 to 1400,
wherein the component (A) and the component (B) are present in a weight ratio of (A)/(B)=90/10 to 65/35 in the polymer blend,
wherein the polymer blend prior to vulcanisation has a Mooney viscosity of 20 to 45 at a vulcanisation temperature, and
wherein the hose has a portion extended at an extension rate of 10% to 100% with respect to a corresponding portion thereof before vulcanisation.

2. A method of making a fuel transporting hose comprising a layer of a rubber composition mainly comprised of a polymer blend which consists of:
(A) an acrylonitrile-butadiene rubber containing bound acrylonitrile in a proportion of 42 wt% to 52 wt%; and
(B) a polyvinyl chloride having an average polymerisation degree of 700 to 1400,
wherein the component (A) and the component (B) are present in a weight ratio of (A)/(B)=90/10 to 65/35 in the polymer blend,
wherein the polymer blend prior to vulcanisation has a Mooney viscosity of 20 to 45 at a vulcanisation temperature, comprising the step of extending a portion of the hose at an extension rate of 10% to 100% with respect to a corresponding portion thereof before vulcanisation.

## Patentansprüche

1. Kraftstoffschlauch, welcher eine Schicht einer Kautschukzusammensetzung umfasst, die hauptsächlich von einer Polymermischung umfasst ist, welche besteht aus:
(A) einem Acrylnitril-Butadien-Kautschuk, welcher Acrylnitril gebunden in einem Anteil von 42 Gew.-% bis 52 Gew.-% enthält; und
(B) einem Polyvinylchlorid mit einem durchschnittlichen Polymerisationsgrad von 700 bis 1400,
wobei die Komponente (A) und die Komponente (B) in einem Gewichtsverhältnis von (A)/(B)=90/10 bis 65/35 in der Polymermischung vorhanden sind,
wobei die Polymermischung vor einer Vulkanisation eine Mooney-Viskosität von 20 bis 45 bei einer Vulkanisationstemperatur aufweist, und
wobei der Schlauch einen mit einem Weitungsverhältnis von 10% bis 100% geweiteten Bereich in Bezug auf einen entsprechenden Bereich desselben vor der Vulkanisation aufweist.

2. Verfahren zum Herstellen eines Kraftstoffschlauches, welcher eine Schicht einer Kautschukzusammensetzung umfasst, die hauptsächlich von einer Polymermischung umfasst ist, welche besteht aus:
(A) einem Acrylnitril-Butadien-Kautschuk, welcher Acrylnitril gebunden in einem Anteil von 42 Gew.-% bis 52 Gew.-% enthält; und
(B) einem Polyvinylchlorid mit einem durchschnittlichen Polymerisationsgrad von 700 bis 1400,
wobei die Komponente (A) und die Komponente (B) in einem Gewichtsverhältnis von (A)/(B)=90/10 bis 65/35 in der Polymermischung vorhanden sind,
wobei die Polymermischung vor einer Vulkanisation eine Mooney-Viskosität von 20 bis 45 bei einer Vulkanisationstemperatur aufweist, umfassend den Schritt eines Weitens eines Bereichs des Schlauchs mit einem Weitungsverhältnis von 10% bis 100% in Bezug auf einen entsprechenden Bereich desselben vor der Vulkanisation.

## Revendications

1. Conduite de transport de combustible comprenant une couche de caoutchouc principalement constituée d'un mélange de polymère qui consiste en :
(A) Un caoutchouc d'acrylonitrile-butadiène contenant de l'acrylonitrile lié dans une proportion de 42 à 52 % en poids ; et
(B) Un chlorure de polyvinyle ayant un degré de polymérisation moyen compris entre 700 et 1400,
dans lequel le composant (A) et le composant (B) sont présents selon un rapport en poids de (A)/(B) = 90/10 à 65/35 dans le mélange de polymère,
dans lequel le mélange de polymère avant vulcanisation a une consistance Mooney comprise entre 20 et 45 à une température de vulcanisation, et
dans lequel la conduite a une partie allongée selon un coefficient d'allongement compris entre 10 et 100 % par rapport à une partie correspondante avant vulcanisation.

2. Procédé de fabrication d'une conduite de transport de combustible comprenant une couche composée de caoutchouc constitué principalement d'un mélange de polymère qui consiste en :
(A) Un caoutchouc d'acrylonitrile-butadiène contenant de l'acrylonitrile lié dans une proportion de 42 à 52 % en poids ; et
(B) Un chlorure de polyvinyle ayant un degré de polymérisation moyen compris entre 700 et 1400,
dans lequel le composant (A) et le composant (B) sont présents selon un rapport en poids de (A)/(B) = 90/10 à 65/35 dans le mélange de polymère,
dans lequel le mélange de polymère avant vulcanisation a une consistance Mooney comprise entre 20 et 45 à une température de vulcanisation, comprenant l'étape d'allongement d'une partie de la conduite selon un coefficient d'allongement compris entre 10 et 100 % par rapport à une partie correspondante avant vulcanisation.
